(19) Europäisches Patentamt
European Patent Office
Office européen des brevets

(11) **EP 4 270 545 A1**

(12) **EUROPEAN PATENT APPLICATION**
published in accordance with Art. 153(4) EPC

(43) Date of publication:
**01.11.2023  Bulletin 2023/44**

(21) Application number: **20966411.9**

(22) Date of filing: **23.12.2020**

(51) International Patent Classification (IPC):
***H01M 4/525*** (2010.01)

(52) Cooperative Patent Classification (CPC):
Y02E 60/10; Y02P 70/50

(86) International application number:
**PCT/CN2020/138743**

(87) International publication number:
**WO 2022/133837 (30.06.2022 Gazette 2022/26)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Dongguan Amperex Technology
Limited
Dongguan City, Guangdong Province, PRC
523000 (CN)**

(72) Inventor: **WU, Xia
Dongguan City
Guangdong Province 523000 (CN)**

(74) Representative: **Icosa
83 avenue Denfert-Rochereau
75014 Paris (FR)**

(54) **ELECTROCHEMICAL DEVICE AND ELECTRONIC DEVICE**

(57)    This application provides an electrochemical apparatus including a positive electrode. The positive electrode includes a positive electrode active material layer, and when the electrochemical apparatus is fully discharged, the positive electrode active material layer satisfies at least one of the following conditions: (a) the positive electrode active material layer including a first powder and a second powder, where the first powder includes a lithium cobalt oxide with a $P6_3mc$ structure, the second powder includes a lithium-containing metal oxide, and a ratio of molar concentration of element Li to molar concentration of other metal elements in the lithium-containing metal oxide is $0<a<0.5$; or (b) the positive electrode active material layer including a lithium cobalt oxide with a $P6_3mc$ structure, where the lithium cobalt oxide is provided with a lithium-containing metal oxide on the surface, and a ratio of molar concentration of element Li to molar concentration of other metal elements in the lithium-containing metal oxide is $0<a<0.5$. The electrochemical apparatus of this application has a high specific capacity and cycling stability under high voltage.

EP 4 270 545 A1

**Description**

**TECHNICAL FIELD**

This application relates to the field of electrochemistry, specifically to an electrochemical apparatus and an electronic apparatus.

**BACKGROUND**

Lithium-ion batteries are widely used in portable electronic products, electric transportation, national defense, aviation, and energy reserves due to their high energy density, good cycling performance, environmental friendliness, safety, and zero memory effect. To meet the needs of social development, lithium-ion batteries with higher energy and power densities need to be developed. This requires a higher specific capacity and higher voltage platform of positive electrode materials used.

The most commercialized positive electrode material in the 3C field is $LiCoO_2$ positive electrode material with R-3m phase structure and theoretical capacity of 273.8 mAh/g, which has good cycling and safety performance, high compaction density, and a simple preparation process. $LiCoO_2$ positive electrode materials have dominated the lithium-ion battery materials market since being commercialized by Sony in 1991. To obtain higher specific energy, $LiCoO_2$ is being developed into higher voltage (> 4.6 V vs. Li/Li$^+$). However, $LiCoO_2$ can only reach a capacity of 190 mAh/g when charged to 4.5 V. Attempts have been made to achieve higher specific capacity by de-intercalating more Li$^+$ from the crystal structure, but with further voltage increase, a large amount of Li$^+$ is de-intercalated and the crystal structure undergoes a series of irreversible phase changes (O3 to H1-3 and H1-3 to O1), greatly reducing the cycling and safety performance of the materials. In addition, interfacial side reactions intensify at a high voltage, causing serious Co metal leaching, and high voltage electrolyte technology is difficult to deploy. At high voltage, the decomposition and failure of conventional electrolytes are accelerated, causing very serious capacity decay.

Currently, the industry and research community generally use Al, Mg, Ti, Zn, Ni, and other metal cations for bulk-phase doping to improve structural stability of R-3m phase $LiCoO_2$. Most of the elements are doped to improve the structural stability of the material by delaying irreversible phase transition, but such method is not effective in stabilizing the structure when the voltage is higher than 4.6 V. In addition, a theoretical capacity loss increases with increasing doping. Therefore, there is an urgent need to develop a lithium-ion battery positive electrode material with a high specific capacity, high voltage platform, good structural reversibility, and stable interface at high voltages.

**SUMMARY**

In some embodiments, this application provides an electrochemical apparatus including a positive electrode. The positive electrode includes a positive electrode active material layer, and when the electrochemical apparatus is fully discharged, the positive electrode active material layer satisfies at least one of the following conditions:

(a) the positive electrode active material layer including first powder and second powder, where the first powder includes a lithium cobalt oxide with a $P6_3mc$ structure, the second powder includes a lithium-containing metal oxide, and a ratio of molar concentration of element Li to molar concentration of other metal elements in the lithium-containing metal oxide is 0<a<0.5; or

(b) the positive electrode active material layer including a lithium cobalt oxide with a $P6_3mc$ structure, where the lithium cobalt oxide is provided with a lithium-containing metal oxide on the surface, and a ratio of molar concentration of element Li to molar concentration of other metal elements in the lithium-containing metal oxide is 0<a<0.5.

In some embodiments, the lithium-containing metal oxide includes a compound represented by a general formula $Li_aNO_{2+b}$, where 0<a<0.5, 0<b<6, and N includes at least one of Al, Mg, Ti, Mn, Fe, Ni, Zn, Cu, Nb, Cr, Zr, or Y; preferably, N includes at least one of Fe or Ni.

In some embodiments, the lithium cobalt oxide includes elements Li and Co, and optionally element M, where element M includes at least one of Al, Mg, Ti, Mn, Fe, Ni, Zn, Cu, Nb, Cr, Zr, or Y, and a total molar concentration of Co and element M is $n_{Co+M}$, satisfying at least one of the following conditions:

In some embodiments, molar concentration of Li in the lithium cobalt oxide is $n_{Li}$, and a ratio of $n_{Li}$ to $n_{Co+M}$ is x, where 0.6<x<0.95, preferably 0.65<x<0.73.

In some embodiments, the lithium cobalt oxide further includes element Na, molar concentration of element Na is $n_{Na}$, and a ratio of $n_{Na}$ to $n_{Co+M}$ is z, where 0≤z<0.03.

In some embodiments, molar concentration of element M is $n_M$, a ratio of $n_M$ to $n_{Co+M}$ is y with 0≤y<0.15, molar concentration of element Co is $n_{Co}$, and a ratio of nco to $n_{Co+M}$ is 1-y.

In some embodiments, the lithium cobalt oxide includes a compound represented by a general formula $Li_xNa_zCo_{1-y}M_yO_2$, where $0.6<x<0.95$, $0\leq y<0.15$, and $0\leq z<0.03$.

In some embodiments, a main XRD peak of the lithium cobalt oxide corresponding to (002) crystal plane is between 17.5° and 19°.

In some embodiments, an average particle size $D_0$ of the second powder and an average particle size Di of the first powder satisfy $0<D_0/D_1<0.05$.

In some embodiments, the average particle size Di of the first powder ranges from 15 $\mu$m to 30 $\mu$m.

In some embodiments, a mass ratio of the second powder to the first powder is m, where $0<m\leq0.3$.

In some embodiments, an average thickness of the lithium-containing metal oxide on the surface of the lithium cobalt oxide is h, and an average particle size of the lithium cobalt oxide is D, satisfying: $0<h/D\leq0.05$.

In some embodiments, the average particle size D of the lithium cobalt oxide ranges from 15 $\mu$m to 30 $\mu$m.

In some embodiments, particles of the lithium cobalt oxide with the $P6_3mc$ structure have internal pores or cracks.

In some embodiments, the first powder and the second powder are obtained by sieving the positive electrode active material layer using a 2000 mesh sieve after binder and conductive agent are removed, where powder having passed the sieve is the second powder, and powder having not passed the sieve is the first powder.

In some embodiments, when the electrochemical apparatus of this application is fully discharged, a discharge capacity thereof is not less than 210 mAh/g.

In some embodiments, a charge cut-off voltage of the electrochemical apparatus is 4.6 V-4.8 V.

Further, this application also provides an electronic apparatus, including the foregoing electrochemical apparatus.

The electrochemical apparatus provided in this application has a high specific capacity and cycling capacity stability under high voltage.

## DETAILED DESCRIPTION OF EMBODIMENTS

It should be understood that the disclosed embodiments are merely examples of this application. This application may be implemented in various forms. Therefore, specific details disclosed herein should not be interpreted as any limitation and shall be used merely as a basis for the claims and serve as an illustrative basis to instruct persons skilled in the art to implement this application in various manners.

In the description of this application, terms and terminology not expressly stated are common knowledge to those of skill in the art, and methods not expressly stated are conventional methods known to persons skilled in the art.

In the description of this application, "full discharge" means to discharge the electrochemical apparatus at a constant current until 0% state of charge (SOC). In the description of this application, the ratios are all in the same unit of measurement. In the description of this application, "average particle size" refers to the following: a material powder is observed by using SEM scanning electron microscopy, then an image resolution software is used to randomly select 10 material particles from a SEM photograph, and area of each of the material particles is calculated. Assuming that the material particles are spherical, their respective particle sizes R (diameter) are calculated through the following equation:

$$R=2 \times (S/\pi)^{1/2},$$

where S is the area of the material particle.

Respective particle sizes R of particles of the material from 10 SEM images are calculated, and arithmetic averaging is performed on the obtained particle sizes of the 100 ($10\times10$) particles of the material to obtain an average particle size of the particles of the material.

The electrochemical apparatus of this application is described in detail below.

The electrochemical apparatus of this application is, for example, a primary battery or a secondary battery. The secondary battery is, for example, a lithium secondary battery, and the lithium secondary battery includes but is not limited to a lithium metal secondary battery, a lithium-ion secondary battery, a lithium polymer secondary battery, or a lithium-ion polymer secondary battery.

[Positive electrode plate]

In some embodiments, the electrochemical apparatus of this application includes a positive electrode plate. The positive electrode plate is a positive electrode plate that is known in the art to be usable in an electrochemical apparatus. In some embodiments, the positive electrode plate includes a positive electrode active material layer.

(Positive electrode active material layer)

In some embodiments, after the electrochemical apparatus of this application is fully discharged, the positive electrode active material layer includes a hybrid composite positive electrode material and/or clad composite positive electrode material formed by a lithium cobalt oxide with a $P6_3mc$ structure and a lithium-containing metal oxide. The lithium cobalt oxide positive electrode material with $P6_3mc$ structure has a special HCP oxygen structure. The material is lithium-deficient and needs to de-intercalate lithium ions to open a channel during the charging process while having an ability to electrochemically intercalate lithium to absorb additional lithium ions in addition to accommodating its de-intercalated lithium ions during the discharging process. When such positive electrode material is used in lithium-ion batteries, its charge cut-off voltage can be as high as 4.8 V, and it has excellent cycling performance and high-temperature storage performance. However, the material is lithium-deficient and requires another component to provide lithium ions. The lithium-containing metal oxide releases lithium ions during charging but has poor reversibility, and during discharging, most lithium ions are intercalated into the $P6_3mc$ positive electrode material, which is deficient in lithium ions. The $P6_3mc$ positive electrode material can well receive this part of lithium ions and present stable cycling characteristics, achieving high first-cycle discharge/charge efficiency and high discharge capacity.

In some embodiments, when the electrochemical apparatus of this application is fully discharged, the positive electrode active material layer satisfies at least one of the following conditions:

(a) the positive electrode active material layer including first powder and second powder, where the first powder includes a lithium cobalt oxide with a $P6_3mc$ structure, the second powder includes a lithium-containing metal oxide, and a ratio of molar concentration of element Li to molar concentration of other metal elements in the lithium-containing metal oxide is $0<a<0.5$; or

(b) the positive electrode active material layer including a lithium cobalt oxide with a $P6_3mc$ structure, where the lithium cobalt oxide is provided with a lithium-containing metal oxide on the surface, and a ratio of molar concentration of element Li to molar concentration of other metal elements in the lithium-containing metal oxide is $0<a<0.5$.

In some embodiments, the first powder and the second powder are obtained by sieving the positive electrode active material layer using a 2000 mesh sieve after binder and conductive agent are removed, where powder having passed the sieve is the second powder, and powder having not passed the sieve is the first powder. The removal of the binder and conductive agent includes burning the binder and conductive agent in the active material layer with a flame under an empty atmosphere.

In some embodiments, when the electrochemical apparatus of this application is fully discharged, the positive electrode active material layer further satisfies at least one of the following conditions:

(c) a mass ratio of the second powder to the first powder being m, where $0<m<0.3$; or

(d) an average thickness of the lithium-containing metal oxide on the surface of the lithium cobalt oxide being h, and an average particle size of the lithium cobalt oxide being D, satisfying: $0<h/D\leq0.05$.

In some embodiments, the average particle size D of the lithium cobalt oxide ranges from 15 $\mu$m to 30 $\mu$m.

In some embodiments, when the electrochemical apparatus of this application is fully discharged, an average particle size $D_0$ of the second powder and an average particle size Di of the first powder satisfy $0<D_0/D_1<0.05$. In some embodiments, the average particle size Di of the first powder ranges from 15 $\mu$m to 30 $\mu$m.

<Lithium cobalt oxide>

In some embodiments, when the electrochemical apparatus of this application is fully discharged, the lithium cobalt oxide includes elements Li and Co, and optionally element M, where element M includes at least one of Al, Mg, Ti, Mn, Fe, Ni, Zn, Cu, Nb, Cr, Zr, or Y, and a total molar concentration of Co and element M is $n_{Co+M}$, and the lithium cobalt oxide satisfies at least one of the following conditions:

(e) molar concentration of Li being $n_{Li}$, and a ratio of $n_{Li}$ to $n_{Co+M}$ being x, where $0.6<x<0.95$, preferably $0.65<x<0.73$;

(f) the lithium cobalt oxide further including element Na, molar concentration of element Na being $n_{Na}$, and a ratio of $n_{Na}$ to $n_{Co+M}$ being z, where $0\leq z<0.03$; or

(g) molar concentration of element M being $n_M$, a ratio of $n_M$ to the $n_{Co+M}$ being y with $0\leq y<0.15$, molar concentration of element Co being $n_{Co}$, and a ratio of nco to $n_{Co+M}$ being 1-y.

In some embodiments, when the electrochemical apparatus of this application is fully discharged, the lithium cobalt oxide satisfies at least one of the following conditions:

(h) the lithium cobalt oxide including a compound represented by a general formula $Li_xNa_zCo_{1-y}M_yO_2$, where 0.6<x<0.95, 0≤y<0.15, and 0≤z<0.03; or

(i) a main XRD peak of the lithium cobalt oxide corresponding to (002) crystal plane being between 17.5° and 19°.

In some embodiments, when the electrochemical apparatus of this application is fully discharged, particles of the lithium cobalt oxide with the $P6_3mc$ structure have internal pores or cracks.

In some embodiments, a determining method for pores and cracks includes: processing the material using an ion polisher (JEOL-IB-09010CP) to obtain a cross-section; photographing the cross-section using SEM at a magnification of not less than 5.0k to obtain an image of particles, in which closed zones that have colors differ from the surroundings are pores and cracks. The closed zone is a zone surrounded by closed lines in the image. A line between any point inside the closed zone and any point outside the zone intersects the boundary of the zone. In the image, any two points of a closed curve are connected, where the longest distance is the longest axis, and the shortest distance is the shortest axis. A pore selection criterion can be: a ratio of the longest axis of the closed zone in a single particle in the image to the longest axis of that particle is not greater than 10%, and a difference between the longest axis and the shortest axis of the closed zone is less than 0.5 micrometer. A crack selection criterion can be: a ratio of the longest axis of the closed zone in a single particle to the longest axis of that particle is not less than 70%.

<Lithium-containing metal oxide>

In some embodiments, when the electrochemical apparatus of this application is fully discharged, the lithium-containing metal oxide includes a compound represented by a general formula $Li_aNO_{2+b}$, where 0<a<0.5, 0<b<6, and N includes at least one of Al, Mg, Ti, Mn, Fe, Ni, Zn, Cu, Nb, Cr, Zr, or Y; preferably, N includes at least one of Fe or Ni.

In some embodiments, when the electrochemical apparatus of this application is fully discharged, a discharge capacity thereof is not less than 210 mAh/g, where test steps of the discharge capacity include: performing charging and discharging in an environment of 25°C, specially, constant current charging at 0.5C until the upper limit voltage is 4.8 V; and then, constant current discharging at 0.5C until the final voltage is 3 V, so as to obtain the discharge capacity.

In some embodiments, a charge cut-off voltage of the electrochemical apparatus is 4.6 V-4.8 V. With the charge cut-off voltage of 4.6 V-4.8 V, the lithium cobalt oxide positive electrode material with $P6_3mc$ structure is very stable at its interface due to its special oxygen structure, thus allowing good cycling performance of the electrochemical apparatus.

(Preparation method for composite positive electrode material)

In some embodiments, the foregoing preparation method for composite positive electrode material in this application includes the following steps.

(1) Synthesize M-element doped $(Co_{1-y}M_y)_3O_4$ precursor by liquid phase precipitation plus sintering: firstly, dissolve soluble cobalt salt (for example, cobalt chloride, cobalt acetate, cobalt sulfate, cobalt nitrate, or the like) and M salt (such as sulfate) in a ratio of Co:M=(1-y):y into a solvent (such as deionized water), add precipitant (such as sodium carbonate) and complexing agent (such as ammonia), and adjust pH (for example, adjust pH to 5-9) to obtain precipitate; then, sinter and grind the precipitate to obtain $(Co_{1-y}M_y)_3O_4$ powder; and finally, react the $(Co_{1-y}M_y)_3O_4$ powder with $Na_2CO_3$ in a stoichiometric ratio (for example, n:1-y) at 700°C-900°C and air atmosphere for 36-48 h to obtain $Na_nCo_{1-y}M_yOa$, where 0≤y<0.15, and 0.6≤n <1.

(2) Mix $Na_nCo_{1-y}M_yO_2$, as the precursor, with lithium-containing molten salt (for example, lithium nitrate, lithium chloride, lithium hydroxide, or the like) uniform in a ratio preferably Na:Li=1:5, and react at 200°C-400°C, in air atmosphere for 2 h to 8 h, wash the reactants in deionized water several times, and when the molten salt is cleaned, dry the powder to obtain $Li_xNa_zCo_{1-y}M_yO_2$ with an HCP oxygen structure, where 0.6<x<0.95, 0≤y<0.15, and 0≤z<0.03.

(3) Further sinter lithium salt (for example, lithium carbonate, lithium nitrate, or lithium chloride) and N salt or oxide (for example, manganese acetate, nickel sulfate, manganese carbonate or manganese oxide, or nickel oxide) in a ratio of Li:N=(2±h):1 to form $Li_hNO_k$, where 0<h<10 and 0<k<8.

(4) Mix the products of Step 2 and Step 3 to uniform in a specific ratio (for example, m=0.1, m=0.2, or m=0.25) to obtain a hybrid composite positive electrode material.

(5) Add the lithium salt (such as lithium carbonate, lithium nitrate, or lithium chloride) and N salt or oxide (such as manganese acetate, nickel sulfate, manganese carbonate, or manganese oxide, or nickel oxide) to the powder obtained from Step 2 in a ratio of Li:N=(2±h):1, and further sinter to obtain a clad composite positive electrode material.

In some embodiments, the structure of the positive electrode plate is known in the art as a structure of a positive electrode plate that can be used in an electrochemical apparatus.

In some embodiments, the preparation method for positive electrode plate is known in the art as a preparation method for positive electrode plate that can be used in an electrochemical apparatus. In some embodiments, in the preparation of the positive electrode slurry, the positive electrode slurry is usually made by adding the positive electrode active material, the binder, and needed conductive material and thickener, and dissolving or dispersing them in a solvent. The solvent is volatilized and removed in the drying process. The solvent is a solvent known in the art that can be used in a positive electrode active material layer. For example, the solvent is but is not limited to N-methyl pyrrolidone (NMP).

[Negative electrode plate]

In some embodiments, the electrochemical apparatus of this application includes a negative electrode plate. The negative electrode plate is a negative electrode plate that is known in the art to be used in an electrochemical apparatus. In some embodiments, the negative electrode plate includes a negative current collector and a negative electrode active material layer disposed on the negative current collector. In some embodiments, the negative electrode active material layer includes a negative electrode active material and a negative electrode binder.

The negative electrode active material may be a conventionally known material capable of intercalating or de-intercalating active ions or a conventionally known material capable of doping or de-doping active ions of various kinds known in the art that can be used as the negative electrode active material for an electrochemical apparatus.

In some embodiments, the negative electrode active material includes at least one of a lithium metal, a lithium metal alloy, a transition metal oxide, a carbon material, or a silicon-based material.

In some embodiments, the negative electrode binder may include various polymeric binders.

In some embodiments, the negative electrode active material layer further includes a negative electrode conductive agent. The negative electrode conductive agent is configured to provide conductivity to the negative electrode, thereby improving negative electrode conductivity. The negative electrode conductive agent is known in the art as a conductive material that can be used in a negative electrode active material layer. The negative electrode conductive agent can be selected from any materials that conduct electricity, as long as it does not cause chemical changes.

In some embodiments, the structure of the negative electrode plate is known in the art as a structure of a negative electrode plate that can be used in an electrochemical apparatus.

In some embodiments, the preparation method for negative electrode plate is known in the art as a preparation method for negative electrode plate that can be used in an electrochemical apparatus. In some embodiments, in the preparation of the negative electrode slurry, the negative electrode slurry is usually made by adding the negative electrode active material, the binder, and needed conductive material and thickener, and dissolving or dispersing them in a solvent. The solvent is volatilized and removed in the drying process. The solvent is a solvent well known in the art that can be used in a negative electrode active material layer, the solvent being, for example, but not limited to, water. The thickener is a thickener known in the art that can be used as a thickener of the negative electrode active material layer, the thickener being, for example, but not limited to, sodium carboxymethyl cellulose.

[Separator]

In some embodiments, the electrochemical apparatus of this application includes a separator. The separator is known in the art as a separator that can be used in an electrochemical apparatus, the separator being, for example, but not limited to, a polyolefin porous separator. In some embodiments, the polyolefin porous separator includes a monolayer or multilayer separator consisting of one or more of polyethylene (PE), ethylene-propylene copolymer, polypropylene (PP), ethylene-butene copolymer, ethylene-hexene copolymer, or ethylene-methyl methacrylate copolymer.

There are no particular restrictions on the form and thickness of the separator in this application. A preparation method for the separator is a preparation method well known in the art that can be used for preparing separators of electrochemical apparatuses.

[Electrolyte]

In some embodiments, the electrochemical apparatus of this application includes an electrolyte.

In some embodiments, the electrolyte includes an electrolytic salt. The electrolytic salt is an electrolytic salt well known in the art that can be used in an electrochemical apparatus. Suitable electrolytic salts can be selected for different electrochemical apparatuses. For example, for lithium-ion batteries, the electrolytic salt is typically a lithium salt.

In some embodiments, the electrolyte further includes an organic solvent. The organic solvent is an organic solvent well known in the art to be suitable for an electrochemical apparatus, for example, a non-aqueous organic solvent is typically used. In some embodiments, the non-aqueous organic solvent includes at least one of a carbonate solvent, a carboxylate solvent, an ether solvent, a sulfone solvent, or other non-protonic solvent.

In some embodiments, the electrolyte further includes an additive. The additive is an additive well known in the art to be suitable for an electrochemical apparatus and can be added based on desired performance of the electrochemical apparatus.

The electrolyte can be configured according to a method known by persons skilled in the art, and its composition can be selected based on an actual requirement.

The electronic apparatus of this application is described in the following.

The electronic apparatus of this application may be any electronic apparatus, such as but not limited to a notebook computer, a pen-input computer, a mobile computer, an electronic book player, a portable telephone, a portable fax machine, a portable copier, a portable printer, a stereo headset, a video recorder, a liquid crystal television, a portable cleaner, a portable CD player, a mini-disc, a transceiver, an electronic notebook, a calculator, a memory card, a portable recorder, a radio, a backup power source, a motor, an automobile, a motorcycle, a motor bicycle, a bicycle, a lighting appliance, a toy, a game console, a clock, an electric tool, a flash lamp, a camera, a large household battery, or a lithium-ion capacitor. It should be noted that the electrochemical apparatus in this application is also applicable to energy storage power plants, marine transport vehicles, and air transport vehicles, in addition to the foregoing electronic apparatuses. The air transport vehicles include air transport vehicles in the atmosphere and air transport vehicles beyond the atmosphere.

In some embodiments, the electronic apparatus includes the electrochemical apparatus in this application.

The following further describes this application with reference to examples. It should be understood that these examples are merely used to describe this application but not to limit the scope of this application.

In the following examples and comparative examples, all reagents, materials, and the like used are commercially available or synthesized unless otherwise specified.

Lithium-ion batteries in the examples and comparative examples are all prepared according to the following method.

(1) Preparation of positive electrode plate

A hybrid or clad composite positive electrode material was prepared according to the foregoing preparation method of composite positive electrode material. The prepared composite positive electrode material, conductive carbon black (Super P), and binder polyvinylidene fluoride (PVDF) were mixed in an appropriate amount of N-methyl pyrrolidone (NMP) in 95:2:3 weight ratio with sufficient stirring to form a uniform positive electrode slurry; the positive electrode slurry was applied on a 12 $\mu$m aluminum foil, followed by drying and cold pressing, and then cutting and welding with tabs, to obtain a positive electrode plate.

(2) Preparation of negative electrode plate

Artificial graphite, SBR, and sodium carboxymethylcellulose (CMC) were mixed with deionized water in a weight ratio of 96:2:2 and stirred well to obtain a negative electrode slurry. The negative electrode slurry was applied onto a copper foil of 12 $\mu$m. Then drying, cold pressing, cutting, and tab welding followed to obtain a negative electrode plate.

(3) A polyethylene (PE) porous polymer film was used as a separator.

(4) Preparation of electrolyte

Under a dry argon atmosphere, ethylene carbonate (EC), propylene carbonate (PC), and diethyl carbonate (DEC) were mixed in a weight ratio of 1:1:1, and $LiPF_6$ was added and well mixed to form electrolyte, where the concentration of $LiPF_6$ was 1.15 mol/L.

(5) The foregoing positive electrode plate, separator, and negative electrode plate were stacked, rolled, and placed in an outer packaging foil in order, leaving an injection opening. The electrolyte was injected from the injection opening which was then sealed. Then, formation and grading were performed to obtain a lithium-ion battery.

The following describes performance test procedures for the lithium-ion batteries.

First-cycle discharge capacity and cycling performance test: At 25°C, the lithium-ion batteries prepared in the examples and comparative examples were charged at a constant current of 0.5C to a voltage of 4.8 V, left resting for 5 min, then discharged at a constant current of 0.5C to a voltage of 3.0 V, and left resting for 5 min. This was a process of one charge and discharge cycle, and the discharge capacity of this cycle was recorded as the first-cycle discharge capacity. Charge/discharge test was performed for the lithium-ion batteries for 100 cycles according to the foregoing method, to detect a discharge capacity at the 100th cycle. Capacity retention rate (%) of the lithium-ion batteries after 100 cycles=discharge capacity after the 100th cycle/first-cycle discharge capacity $\times$ 100%.

Relevant parameters and performance test results of the lithium-ion batteries in the examples and comparative examples are shown in Tables 1 to 4.

Table 1 shows composition parameters of lithium cobalt oxide with $P6_3mc$ structure and lithium-containing metal oxide as well as corresponding electrochemical properties, of the lithium-ion batteries prepared using hybrid composite positive electrode material or lithium cobalt oxide with $P6_3mc$ structure only as the positive electrode material which were fully discharged, where the lithium cobalt oxide with $P6_3mc$ structure and lithium-containing metal oxide were obtained by using a 2000 mesh sieve to sieve the positive electrode active material layer from which the binder and conductive agent had been removed by flame burning under an air atmosphere.

Table 2 shows composition parameters of lithium cobalt oxide with P6$_3$mc structure and lithium-containing metal oxide on its surface in the positive electrode active layer as well as corresponding electrochemical properties, of the lithium-ion batteries prepared using clad composite positive electrode material or lithium cobalt oxide with P6$_3$mc structure only as the positive electrode material which were fully discharged.

Table 3 shows an effect of the mass ratio of lithium cobalt oxide with P6$_3$mc structure and lithium-containing metal oxide in the hybrid composite positive electrode material on the performance of lithium-ion batteries.

Table 4 shows an effect of the microscopic morphology (pores and cracks) of LiCoO with P6$_3$mc structure in the hybrid composite positive electrode material on the performance of lithium-ion batteries.

**Table 1**

| $Li_xNa_zCo_{1-y}M_yO_2$ | LiaNCE+b | Examples | x | y | z | a | b | $D_0/D_1$ | First-cycle discharge capacity (4.8V) | Capacity retention rate (100 cycles) |
|---|---|---|---|---|---|---|---|---|---|---|
| M=Al | N=Fe | Example 1-1 | 0.73 | 0 | 0.02 | 0.1 | 2 | 0.015 | 211 | 89% |
| | | Example 1-2 | 0.73 | 0.015 | 0 | 0.2 | 2 | 0.015 | 211 | 90% |
| | | Example 1-3 | 0.65 | 0.015 | 0.002 | 0.3 | 2 | 0.015 | 213 | 91% |
| | | Example 1-4 | 0.69 | 0.015 | 0.002 | 0.1 | 3 | 0.015 | 215 | 91% |
| | | Example 1-5 | 0.72 | 0.015 | 0.005 | 0.2 | 3 | 0.015 | 216 | 91% |
| | | Example 1-6 | 0.73 | 0.015 | 0.005 | 0.3 | 3 | 0.015 | 219 | 91% |
| | | Example 1-7 | 0.72 | 0.015 | 0.005 | 0.2 | 3 | 0.02 | 216 | 90% |
| | | Example 1-8 | 0.72 | 0.015 | 0.005 | 0.2 | 3 | 0.04 | 217 | 90% |
| M=Al | N=Ni | Example 1-7 | 0.74 | 0.009 | 0.006 | 0.1 | 2 | 0.015 | 214 | 91% |
| | | Example 1-8 | 0.74 | 0.014 | 0.01 | 0.2 | 2 | 0.015 | 220 | 91% |
| M=Al+Mg | N=Ni | Example 1-9 | 0.74 | 0.015+0.002 | 0.006 | 0.1 | 2 | 0.015 | 214 | 89% |
| | | Example 1-10 | 0.74 | 0.018+0.001 | 0.005 | 0.2 | 2 | 0.015 | 213 | 88% |
| M=Al+Ti | N=Ni | Example 1-11 | 0.74 | 0.015+0.001 | 0.004 | 0.1 | 2 | 0.015 | 220 | 91% |
| | | Example 1-12 | 0.74 | 0.007+0.001 | 0.004 | 0.2 | 2 | 0.015 | 221 | 91% |
| M=Al+Mg+Ti | N=Ni | Example 1-13 | 0.74 | 0.003+0.001+0.001 | 0.003 | 0.1 | 2 | 0.015 | 223 | 91% |
| | | Example 1-14 | 0.74 | 0.003+0.002+0.001 | 0.003 | 0.2 | 2 | 0.015 | 219 | 89% |
| M=Al | N=Fe | Comparative Example 1-1 | 0.72 | 0.015 | 0.005 | 0.2 | 3 | 0.055 | 195 | 82% |
| | | Comparative Example 1-2 | 0.72 | 0.015 | 0.005 | 0.2 | 3 | 0.07 | 197 | 81% |
| | | Comparative Example 1-3 | 0.72 | 0.015 | 0.005 | 0.2 | 3 | 0.1 | 198 | 80% |
| | | Comparative Example 1-4 | 0.72 | 0.015 | 0.005 | 0.2 | 3 | 0.3 | 200 | 85% |

(continued)

| $Li_xNa_zCo_{1-y}M_yO_2$ | LiaNCE+b | Examples | x | y | z | a | b | $D_0/D_1$ | First-cycle discharge capacity (4.8V) | Capacity retention rate (100 cycles) |
|---|---|---|---|---|---|---|---|---|---|---|
| M=A1 | NO | Comparative Example 1-5 | 0.5 | 0.015 | 0.002 | | | | 191 | 89% |
| M=Al+Mg | | Comparative Example 1-6 | 0.55 | 0.015+0.002 | 0.006 | | | | 191 | 88% |
| M=Al+Ti | | Comparative Example 1-7 | 0.6 | 0.015+0.002 | 0.006 | | | | 193 | 87% |
| M=Al+Mg+Ti | | Comparative Example 1-8 | 0.6 | 0.003+0.002+0.001 | 0.003 | | | | 192 | 86% |

**Table 2**

| $Li_xNa_zCo_{1-y}M_yO_2$ | LiaNCE+b | Examples | x | y | z | a | b | h/D1 | First-cycle discharge capacity (4.8V) | Capacity retention rate (100 cycles) |
|---|---|---|---|---|---|---|---|---|---|---|
| M=Al | N=Fe | Example 2-1 | 0.73 | 0 | 0.02 | 0.1 | 2 | 0.01 | 211 | 91% |
| | | Example 2-2 | 0.73 | 0.015 | 0 | 0.2 | 2 | 0.01 | 211 | 92% |
| | | Example 2-3 | 0.65 | 0.015 | 0.002 | 0.3 | 2 | 0.01 | 213 | 92% |
| | | Example 2-4 | 0.69 | 0.015 | 0.002 | 0.1 | 3 | 0.01 | 217 | 91.00% |
| | | Example 2-5 | 0.72 | 0.015 | 0.005 | 0.2 | 3 | 0.01 | 218 | 91% |
| | | Example 2-6 | 0.73 | 0.015 | 0.005 | 0.3 | 3 | 0.01 | 220 | 90.00% |
| | | Example 2-7 | 0.72 | 0.015 | 0.005 | 0.2 | 3 | 0.02 | 221 | 91.00% |
| | | Example 2-8 | 0.72 | 0.015 | 0.005 | 0.2 | 3 | 0.025 | 222 | 91.50% |
| M=Al | N=Ni | Example 2-9 | 0.74 | 0.009 | 0.006 | 0.1 | 2 | 0.01 | 214 | 91% |
| | | Example 2-10 | 0.74 | 0.014 | 0.01 | 0.2 | 2 | 0.01 | 220 | 90.90% |
| M=Al+Mg | N=Ni | Example 2-11 | 0.74 | 0.015+0.002 | 0.006 | 0.1 | 2 | 0.01 | 214 | 89% |
| | | Example 2-12 | 0.74 | 0.018+0.001 | 0.005 | 0.2 | 2 | 0.01 | 213 | 88% |
| M=Al+Ti | N=Ni | Example 2-13 | 0.74 | 0.015+0.001 | 0.004 | 0.1 | 2 | 0.01 | 220 | 90.50% |
| | | Example 2-14 | 0.74 | 0.007+0.001 | 0.004 | 0.2 | 2 | 0.01 | 221 | 91% |
| M=Al+Mg+Ti | N=Ni | Example 2-15 | 0.74 | 0.003+0.001+0.001 | 0.003 | 0.1 | 2 | 0.01 | 223 | 90.90% |
| | | Example 2-16 | 0.74 | 0.003+0.002+0.001 | 0.003 | 0.2 | 2 | 0.01 | 219 | 82% |
| M=Al | N=Fe | Comparative Example 2-1 | 0.72 | 0.015 | 0.005 | 0.2 | 3 | 0.06 | 193 | 85% |
| | | Comparative Example 2-2 | 0.72 | 0.015 | 0.005 | 0.2 | 3 | 0.07 | 192 | 83% |
| | | Comparative Example 2-3 | 0.72 | 0.015 | 0.005 | 0.2 | 3 | 0.1 | 191 | 82.00% |
| | | Comparative Example 2-4 | 0.72 | 0.015 | 0.005 | 0.2 | 3 | 0.3 | 189 | 81% |

(continued)

| $Li_xNa_zCo_{1-y}M_yO_2$ | LiaNCE+b | Examples | x | y | z | a | b | h/D1 | First-cycle discharge capacity (4.8V) | Capacity retention rate (100 cycles) |
|---|---|---|---|---|---|---|---|---|---|---|
| M=Al | | Comparative Example 2-5 | 0.5 | 0.015 | 0.002 | | | | 191 | 89% |
| M=Al+Mg | NO | Comparative Example 2-6 | 0.55 | 0.015+0.002 | 0.006 | | | | 191 | 88% |
| M=Al+Ti | | Comparative Example 2-7 | 0.6 | 0.015+0.002 | 0.006 | | | | 193 | 87.00% |
| $M^1$=Al+Mg+Ti | | Comparative Example 2-8 | 0.6 | 0.003+0.002+0.001 | 0.003 | | | | 192 | 86% |

**Table 3**

| $Li_xNa_ZCo_{1-y}M_yO_2$ $+Li_aNO_{2+b}$ | Examples | Mass ratio m | First-cycle discharge capacity (4.8V) | Capacity retention rate (100 cycles) |
|---|---|---|---|---|
| $Li_{0.73}Na_{0.005}Co_{0.985}Al_{0.015}O_2+Li_{0.3}FeO_5$ | Example 3-1 | 0.1 | 220 | 90% |
| | Example 3-2 | 0.15 | 225 | 92% |
| | Example 3-3 | 0.2 | 210 | 90% |
| | Example 3-4 | 0.05 | 219 | 90% |
| | Example 3-5 | 0.3 | 222 | 89% |
| | Comparative Example 3-1 | 0.4 | 180 | 82% |
| | Comparative Example 3-2 | 0.5 | 178 | 78% |

**Table 4**

| $Li_xNa_ZCo_{1-y}M_yO_2$ $+Li_aNO_{2+b}$ | Examples | Pore? | Crack? | First-cycle discharge capacity (4.8V) | Capacity retention rate (100 cycles) |
|---|---|---|---|---|---|
| $Li_{0.73}Na_{0.005}Co_{0.985}Al_{0.015}O_2+Li_{0.3}FeO_5$ | Example 4-1 | YES | YES | 223 | 93% |
| | Example 4-2 | YES | NO | 210 | 86% |
| | Example 4-3 | NO | YES | 218 | 88% |
| | Example 4-4 | NO | NO | 216 | 87% |

A comparative analysis of the data in Table 1 shows that Examples 1-1 to 1-14 using the hybrid composite positive electrode material have significantly higher first-cycle discharge capacity and equally excellent capacity retention rate, compared to Comparative Examples 1-5 to 1-8 using only lithium cobalt oxide with $P6_3mc$ structure as the positive electrode material. Compared to Comparative Examples 1-1 to 1-4 with $D_0/D_1>0.05$, examples with $0<D_0/D_1<0.05$ have better first-cycle discharge capacity and capacity retention rate. The reasons are that on one aspect, an oversized particle size of the lithium-containing metal oxide is not conducive to sufficient de-intercalation of internal lithium ions, leading to the inability to replenish the capacity of the lithium cobalt oxide with $P6_3mc$ structure in the process of the first-cycle charging/discharging, which results in a lower first-cycle discharge capacity; on another aspect, the lithium-containing metal oxide with small particle size will fill in the cracks between larger-sized particles the lithium cobalt oxide with $P6_3mc$ structure and will not increase interfacial impedance between the lithium cobalt oxide particles, while the lithium-containing metal oxide with large particle size blocked between particles of the lithium cobalt oxide with $P6_3mc$ structure will increase the interfacial impedance of the active material, resulting in poor cycling performance.

A comparative analysis of the data in Table 2 shows that compared to Comparative Examples 2-5 to 2-8 using only lithium cobalt oxide with $P6_3mc$ structure as the positive electrode material, examples with $0<h/D\leq0.05$ also have significantly higher first-cycle discharge capacity and the same excellent capacity retention. Compared to Comparative Examples 2-5 to 2-8, Comparative Examples 2-1 to 2-4 with $h/D>0.05$ do not have obviously increased first-cycle discharge capacity, while their cycling performance decreases significantly due to the thick lithium metal oxide (which has a low conductivity) which increases the interfacial impedance between particles of the lithium cobalt oxide with $P6_3mc$ structure, resulting in a significant decrease in the cycling performance.

A comparative analysis of data in Table 3 shows that, in the lithium-ion batteries made with the hybrid composite positive electrode material, the undersize/oversize mass ratio m is too large and as a result, their first-cycle discharge capacity and cycling capacity retention rate are both reduced. This is because there is an excessive amount of lithium metal oxide, which results in the overall conductivity of the composite electrode material being low, thereby decreasing the discharge/charge efficiency and reducing the capacity. Additionally, a large amount of lithium oxide remains in the delithiated active material, further deteriorating the conductivity of the electrode material during the cycling process, thereby increasing the cycling decay.

A comparative analysis of data in Table 4 shows that Example 4-1 using lithium cobalt oxide particles with both pores and cracks, has the best first-cycle discharge capacity and capacity retention rate. This is because the pore and crack structures facilitate the intercalation and de-intercalation of lithium ions inside the particles, thereby increasing the discharge capacity, and the pore and crack structures also facilitate stress relief during the cycling process, thereby increasing cycling stability.

The foregoing are only a few examples of this application and do not limit this application in any form. Although this application is disclosed as above with preferred embodiments, the embodiments are not intended to limit this disclosure. Changes or modifications made by those skilled in the art to the technical content disclosed above without departing from the scope of the technical solution of this application are considered equivalent embodiments and fall within the scope of the technical solution of this application.

**Claims**

1. An electrochemical apparatus comprising a positive electrode, wherein the positive electrode comprises a positive electrode active material layer, and when the electrochemical apparatus is fully discharged, the positive electrode active material layer satisfies at least one of the following conditions:

   (a) the positive electrode active material layer comprising a first powder and a second powder, wherein the first powder comprises a lithium cobalt oxide with a $P6_3mc$ structure, the second powder comprises a lithium-containing metal oxide, and a ratio of molar concentration of element Li to molar concentration of other metal elements in the lithium-containing metal oxide is $0<a<0.5$; or
   (b) the positive electrode active material layer comprising a lithium cobalt oxide with a $P6_3mc$ structure, wherein the lithium cobalt oxide is provided with a lithium-containing metal oxide on the surface, a ratio of molar concentration of element Li to molar concentration of other metal elements in the lithium-containing metal oxide is $0<a<0.5$.

2. The electrochemical apparatus according to claim 1, wherein the positive electrode active material layer satisfies at least one of the following conditions:

   (c) a mass ratio of the second powder to the first powder being m, wherein $0<m<0.3$; or
   (d) an average thickness of the lithium-containing metal oxide on the surface of the lithium cobalt oxide being h, and an average particle size of the lithium cobalt oxide being D, satisfying: $0<h/D<0.05$.

3. The electrochemical apparatus according to claim 1, wherein the lithium-containing metal oxide comprises a compound represented by a general formula $Li_aNO_{2+b}$, wherein $0<a<0.5$, $0<b<6$, and N comprises at least one of Al, Mg, Ti, Mn, Fe, Ni, Zn, Cu, Nb, Cr, Zr, or Y

4. The electrochemical apparatus according to claim 1, wherein the lithium cobalt oxide comprises elements Li and Co, and optionally element M, wherein element M comprises at least one of Al, Mg, Ti, Mn, Fe, Ni, Zn, Cu, Nb, Cr, Zr, or Y, and a total molar concentration of Co and element M is $n_{Co+M}$, satisfying at least one of the following conditions:

   (e) molar concentration of Li being $n_{Li}$, and a ratio of $n_{Li}$ to $n_{Co+M}$ being x, wherein $0.6<x<0.95$;
   (f) the lithium cobalt oxide further comprising element Na, molar concentration of element Na being $n_{Na}$, and a ratio of $n_{Na}$ to $n_{Co+M}$ being z, wherein $0\leq z<0.03$; or
   (g) molar concentration of element M being $n_M$, a ratio of $n_M$ to $n_{Co+M}$ being y with $0\leq y<0.15$, molar concentration of element Co being $n_{Co}$, and a ratio of $n_{Co}$ to $n_{Co+M}$ being 1-y.

5. The electrochemical apparatus according to claim 4, wherein the lithium cobalt oxide satisfies at least one of the following conditions:

   (h) the lithium cobalt oxide comprising a compound represented by a general formula $Li_xNa_zCo_{1-y}M_yO_2$, wherein $0.6<x<0.95$, $0\leq y<0.15$, $0\leq z<0.03$; or
   (i) a main XRD peak of the lithium cobalt oxide corresponding to (002) crystal plane being between 17.5° and 19°.

6. The electrochemical apparatus according to claim 1, wherein an average particle size $D_0$ of the second powder and an average particle size Di of the first powder satisfy $0 < D_0/D_1 < 0.05$; and the average particle size Di of the first powder ranges from 15 $\mu$m to 30 $\mu$m.

7. The electrochemical apparatus according to claim 1, wherein particles of the lithium cobalt oxide with the $P6_3mc$ structure have internal pores or cracks.

8. The electrochemical apparatus according to claim 1, wherein the first powder and the second powder are obtained by sieving the positive electrode active material layer using a 2000 mesh sieve after binder and conductive agent are removed, wherein powder having passed the sieve is the second powder, and powder having not passed the sieve is the first powder.

9. The electrochemical apparatus according to claim 1, wherein a charge cut-off voltage of the electrochemical apparatus is 4.6 V-4.8 V.

10. An electronic apparatus comprising an electrochemical apparatus according to any one of claims 1 to 9.

## INTERNATIONAL SEARCH REPORT

| International application No. |
|---|
| **PCT/CN2020/138743** |

**A. CLASSIFICATION OF SUBJECT MATTER**

H01M 4/525(2010.01)i

According to International Patent Classification (IPC) or to both national classification and IPC

**B. FIELDS SEARCHED**

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNABS; CNTXT; VEN; USTXT; EPTXT; WOTXT; CNKI: 电池, 正极, 阴极, 贫锂, battery, positive electrode, cathode, poor lithium, P63mc

**C. DOCUMENTS CONSIDERED TO BE RELEVANT**

| Category* | Citation of document, with indication, where appropriate, of the relevant passages | Relevant to claim No. |
|---|---|---|
| X | CN 105940534 A (SANYO ELECTRIC CO., LTD.) 14 September 2016 (2016-09-14) description, paragraphs 7-85, and figures 1-3 | 1-10 |
| X | CN 101689631 A (SANYO ELECTRIC CO., LTD.) 31 March 2010 (2010-03-31) description page 2 line 16 - page 14 line 16 | 1-10 |
| X | WO 2014103303 A1 (SANYO ELECTRIC CO., LTD.) 03 July 2014 (2014-07-03) description, paragraphs 6-42 | 1-10 |
| X | CN 102447102 A (SANYO ELECTRIC CO., LTD.) 09 May 2012 (2012-05-09) description, paragraphs 21-91 | 1-10 |
| X | CN 103582971 A (SANYO ELECTRIC CO., LTD.) 12 February 2014 (2014-02-12) description, paragraphs 11-59 | 1-10 |
| A | JP 2010232063 A (NISSAN MOTOR et al.) 14 October 2010 (2010-10-14) entire document | 1-10 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **20 August 2021** | **08 September 2021** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

| | International application No. |
|---|---|
| | **PCT/CN2020/138743** |

| Patent document cited in search report | | | Publication date (day/month/year) | Patent family member(s) | | | Publication date (day/month/year) |
|---|---|---|---|---|---|---|---|
| CN | 105940534 | A | 14 September 2016 | WO | 2015115025 | A1 | 06 August 2015 |
| | | | | JP | WO2015115025 | A1 | 23 March 2017 |
| | | | | JP | 6329972 | B2 | 23 May 2018 |
| | | | | US | 2016351901 | A1 | 01 December 2016 |
| CN | 101689631 | A | 31 March 2010 | JP | 2011216495 | A | 27 October 2011 |
| | | | | US | 2010173202 | A1 | 08 July 2010 |
| | | | | KR | 20100049043 | A | 11 May 2010 |
| | | | | JP | 2009032681 | A | 12 February 2009 |
| | | | | CN | 101689631 | B | 06 March 2013 |
| | | | | US | 8048564 | B2 | 01 November 2011 |
| | | | | CN | 102903890 | A | 30 January 2013 |
| | | | | JP | 4823275 | B2 | 24 November 2011 |
| | | | | WO | 2009001557 | A1 | 31 December 2008 |
| WO | 2014103303 | A1 | 03 July 2014 | | None | | |
| CN | 102447102 | A | 09 May 2012 | JP | 2012094487 | A | 17 May 2012 |
| | | | | US | 2012082897 | A1 | 05 April 2012 |
| | | | | US | 9350045 | B2 | 24 May 2016 |
| | | | | JP | 5758720 | B2 | 05 August 2015 |
| | | | | EP | 2437342 | A2 | 04 April 2012 |
| | | | | CN | 102447102 | B | 06 January 2016 |
| CN | 103582971 | A | 12 February 2014 | JP | WO2012165207 | A1 | 23 February 2015 |
| | | | | WO | 2012165207 | A1 | 06 December 2012 |
| | | | | JP | 5968883 | B2 | 10 August 2016 |
| | | | | US | 2014079990 | A1 | 20 March 2014 |
| JP | 2010232063 | A | 14 October 2010 | | None | | |

Form PCT/ISA/210 (patent family annex) (January 2015)